# EUROPEAN PATENT SPECIFICATION

(11) **EP 2 099 682 B1**
(45) Date of publication and mention of the grant of the patent: **05.12.2012**
(21) Application number: 07873516.4
(22) Date of filing: 03.10.2007
(51) Int. Cl.: B65B 61/18, B65B 9/20, B31B 19/90

(54) **APPARATUS FOR PROVIDING ZIPPER TO A PACKAGE MAKING MACHINE**
VORRICHTUNG ZUR BEREITSTELLUNG EINES REISSVERSCHLUSSES FÜR EINE MASCHINE ZUR HERSTELLUNG VON VERPACKUNGEN
DISPOSITIF D'APPROVISIONNEMENT DE FERMETURES A GLISSIERE POUR UNE MACHINE D'EMBALLAGE

(30) Priority: 06.12.2006 US 634454
(43) Date of publication of application: 16.09.2009
(73) Proprietor: Illinois Tool Works Inc., Glenview, IL 60026 (US)
(72) Inventor: HOWELL, Clifton, R., Glenview, IL 60026 (US)
(74) Representative: Finnie, Peter John
(86) International application number: PCT/US2007/080260
(87) International publication number: WO 2008/127353

(56) References cited:
- EP-A- 1 702 849
- US-A1- 2003 220 180
- US-A1- 2004 074 058

## Description

### BACKGROUND OF THE INVENTION

### Field of the Invention

The present invention relates to an apparatus for the manufacture of reclosable packages or bags, wherein a drag sealer is used to apply the processed zipper to the film web, then a form fill and seal (FFS) machine is used to finish the package or bag.

### Description of the Prior Art

In the prior art of the manufacture of reclosable packages, particularly, form fill and seal processes, it is known to use an eye mark printed on the film in order to register the film, and to start the end stomp and slider insertion. One such process is disclosed in EP 1702849. However, such a configuration requires a separate step or previous manufacturing process to print the eye marks and the resulting printed film cannot easily be shifted to a manufacturing process wherein different dimensions are required.

Similar prior art manufacturing processes have typically included a drag sealer such as is disclosed in U.S. published patent application serial no. 2006/0207727, entitled "Apparatus for Repeatedly Advancing Fastener Tape a Predetermined Distance", wherein the fastener tape is joined to the sides of a folded web of packaging material.

While these prior art manufacturing processes have been satisfactory for their intended purposes, further improvements are sought, such as eliminating the requirement for printed eye marks on the web.

### OBJECTS AND SUMMARY OF THE INVENTION

It is therefore an object of the present invention to provide an apparatus for the manufacture of reclosable packages or bags wherein the requirement for a printed eye mark is eliminated.

It is therefore a further object of the present invention to provide an apparatus for the manufacture of reclosable packages or bags wherein the drag sealer is used to fasten the zipper tape to the film prior to the form fill and seal manufacturing steps.

These and other objects are attained by an apparatus for the manufacture of reclosable packages or bags according to claim 1. This apparatus further uses an encoder count on the film to start the end stomp and slider insertion. A zipper clamp is used to hold the zipper in place during slider insertion and end stomping. A zipper de-accumulator is used to feed the continuous motion drag sealer. When the insertion and stomp process is complete the zipper clamp is opened and the de-accumulator is forced to its extended position. The continuous motion of the drag sealer and the extension of the de-accumulator pulls the zipper through the slider inserter and end stomp units. The film encoder count then starts the process again. The bag machine then uses the slider or zipper end stomp for registration using a light or mechanical sensor.

A form fill and seal step is subsequently performed to complete the reclosable package or bag.

### BRIEF DESCRIPTION OF THE DRAWING

Further objects and advantages of the invention will become apparent from the following description and from the accompanying drawings, wherein:
Figure 1 is a schematic of the apparatus of the present invention.
Figure 2 is a schematic of a drag sealer as used in the apparatus of the present invention.

### DETAILED DESCRIPTION OF THE PREFERRED EMBODIMENT

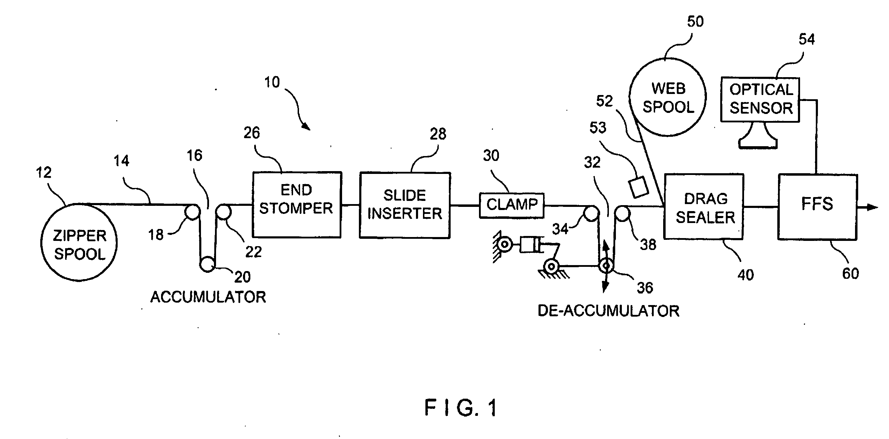

Referring now to the drawings in detail wherein like numerals indicate like elements throughout the several views, one sees that Figure 1 is a schematic of the apparatus 10 of the present invention.

Apparatus 10 includes spool 12 from which a continuous length of zipper 14 is fed. Zipper accumulator 16 is comprised of rollers 18, 22 with stationary axes of rotation and roller 20 which has an axis of rotation which moves away from rollers 18, 22 to accumulate the continuous length of zipper 14 and which moves toward a position between rollers 18, 22 to de-accumulate the continuous length of zipper 14. Zipper accumulator 16 is thereby configured as an unwind dancer to accumulate zipper 14 from spool 12 while downstream portions of zipper 14 are intermittently clamped into stationary position. Zipper accumulator 16 can also isolate downstream apparatus components from irregularities in the rotation of spool 12. End stomper 26 uses ultrasonic apparatus to place end stomps on the zipper 14. Likewise, inserter 28 places the zipper sliders on the zipper 14. End stomper 26 and inserter 28 operate while zipper clamp 30 holds zipper 14 in stationary position. Likewise, zipper de-accumulator 32, is comprised of rollers 34, 38, with stationary axes of rotation and roller 36 which has an axis of rotation which moves away from rollers 34, 38 to accumulate the continuous length of zipper 14 and which moves toward a position between rollers 34, 38 to de-accumulate the continuous length of zipper 14. Zipper de-accumulator 32 thereby operates to provide a continuous feed of zipper 14 (including end stomps and sliders) to drag sealer 40 notwithstanding the intermittent motion of zipper 14 due to the upstream clamping of zipper 14 by clamp 30. More particularly, when clamp 30 is released or opened after the operation of end stomper 26 and inserter 28, zipper de-accumulator 32 is forced to its extended position thereby allowing accumulating zipper 14 to provide continuous feeding during the next clamping operation. Zipper 14 along with web 52 as fed from web spool 50 is fed to drag sealer 40. The continuous motion of the drag sealer 40 and the extension of the de-accumulator 32 pulls the zipper 14 through the end stomper 26 and the slider inserter 28. Moreover, the movement of web 52 from web spool is monitored by encoder 53.

Web or film 52 is sealed to zipper 14 by drag sealer 40. Optical sensor 54 senses either the slider or the end stomp placed on the zipper 14 so as to provide the form fill and seal apparatus 60 with information regarding the registration of the zipper 14 as the web 52 with zipper 14 sealed thereto is fed to form fill and seal apparatus 60 for the formation of a reclosable package or bag.

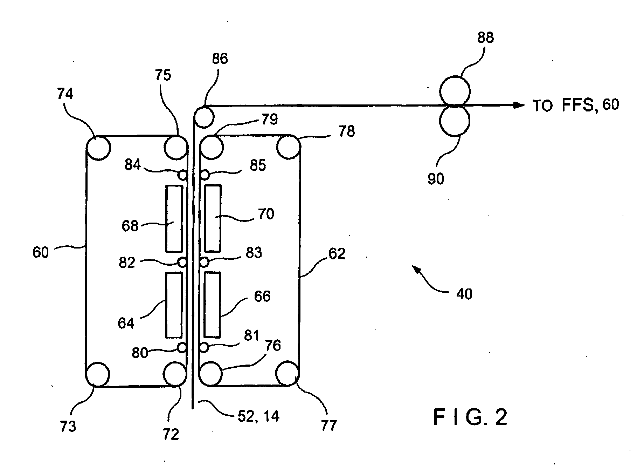

Drag sealer 40 is shown in further detail in Figure 2. Web 52 and zipper 14 are pulled through the nip formed between first and second endless barrier strips 60, 62 and are sealed to each other by first pair of reciprocating sealing bars 64, 66 and second pair of reciprocating sealing bars 68, 70. The sealing is accomplished by electrically heating the sealing bars 64, 66, 68, 70, the heat being conducted through the first and second endless barrier strips 60, 62 made of polytetrafluoroethylene (Teflon) or a similar material, which circulate on respective first set of rollers 72, 73, 74, 75 and second set of rollers 76, 77, 78, 79. Additionally, the endless barrier strips 60, 62 and the web 52 with zipper 14 pass between first pair of guide rollers 80, 81 prior to first set of sealing bars 64, 66; second pair of guide rollers 82, 83 between first set of sealing bars 64, 66 and second set of sealing bars 68, 70; and third pair of guide rollers 84, 85 after second set of sealing bars 68, 70. Optional guide roller 86 may be used to redirect web 52 with zipper 14 sealed thereto if necessary.

Pinch rollers 88, 90 pull the web 52 with the zipper 14 sealed thereto through drag sealer 40 and are typically part of form fill and seal apparatus 60. As stated previously, form fill and seal apparatus 60, which may be any of the numerous such devices known in the prior art, completes the reclosable package.

Thus the several aforementioned objects and advantages are most effectively attained. Although preferred embodiments of the invention have been disclosed and described in detail herein, it should be understood that this invention is in no sense limited thereby and its scope is to be determined by that of the appended claims.

## Claims

1. An apparatus (10) for providing zipper (14) to a reclosable package making apparatus (60) comprising:
a supply (12) of continuous length of zipper (14);
a device (30) for intermittently maintaining a portion of the continuous length of zipper (14) in a stationary position;
a device (28) for inserting a slider onto the portion of continuous length of zipper (14) in a stationary position;
a device (26) for placing an end stomp onto the portion of continuous length of zipper (14) in a stationary position;
a supply (50) of web (52);
an encoder (53) for regulating the feeding of web (52) from the supply (50) of web;
a sensor (54) for sensing end stomps or sliders on the continuous length of zipper (14); and
a drag sealer (40) for sealing the zipper (14) to a web (52) from the supply (50) of web.

2. The apparatus of Claim 1 wherein the device for intermittently maintaining a portion of the continuous length of zipper is a clamp (30).

3. The apparatus of Claim 1 or Claim 2 wherein the device (26) for placing an end stomp onto the portion of continuous length of zipper (14) uses ultrasonic apparatus.

4. The apparatus of Claim 1, 2 or 3 further including an accumulator device (16) to allow feeding the continuous length of zipper (14) from the supply while a portion of the continuous length of zipper is in a stationary position.

5. The apparatus of Claim 4 wherein the accumulator device (16) includes first and second rollers (18,22) with stationary axes of rotation, and a third roller (20) with an axis of rotation which moves away from the first and second rollers (18,22) to accumulate the continuous length of zipper (14) and which moves toward a position between the first and second rollers (18,22) to de-accumulate the continuous length of zipper (14).

6. The apparatus of Claim 4 or Claim 5 further including a de-accumulator device (32) to allow feeding the continuous length of zipper (14) to the drag sealer (40) while a portion of the continuous length of zipper (14) is in a stationary position.

7. The apparatus of Claim 6 wherein the de-accumulator device (32) includes first and second rollers (34,38) with stationary axes of rotation, and a third roller (36) with an axis of rotation which moves away from the first and second rollers (34,38) to accumulate the continuous length of zipper (14) and which moves toward a position between the first and second rollers (34,38) to de-accumulate the continuous length of zipper (14).

8. The apparatus of any preceding claim further including said package making apparatus (60) receiving the web (52) with zipper (14) sealed thereto from the drag sealer (40).

9. The apparatus of Claim 8 wherein the package making apparatus is a form fill and seal apparatus (60).

10. The apparatus of Claim 9 wherein the form fill and seal apparatus (60) includes rollers (88,90) to pull the web (52) with zipper (14) sealed thereto from the drag sealer (40) to the form fill seal apparatus (60).

11. The apparatus of any preceding claim wherein the sensor (54) is optical.

12. The apparatus of preceding claim wherein the drag sealer (40) includes at least one pair of opposed sealing bars (64,66;68,70).

## Patentansprüche

1. Vorrichtung (10) zum Versehen einer Vorrichtung (60) zum Herstellen von wiederverschließbaren Verpackungen mit Schnellverschlüssen (14), aufweisend:
eine Zufuhr (12) einer fortlaufenden Länge von Schnellverschlüssen (14);
ein Gerät (30) zum intermittierenden Erhalten eines Abschnitts der fortlaufenden Länge von Schnellverschlüssen (14) in einer ortsfesten Position;
ein Gerät (28) zum Einfügen eines Gleitstücks auf dem Abschnitt von fortlaufender Länge von Schnellverschlüssen (14) in einer ortsfesten Position;
ein Gerät (26) zum Anordnen einer Endstampfung auf dem Abschnitt von fortlaufender Länge von Schnellverschlüssen (14) in einer ortsfesten Position;
eine Zufuhr (50) von Bahnen (52);
einen Geber (53) zum Regulieren des Zuführens von Bahnen (52) von der Bahnzufuhr (50);
einen Sensor (54) zum Wahrnehmen von Endstampfungen oder Gleitstücken auf der fortlaufenden Länge von Schnellverschlüssen (14); und
einen Schleppversiegler (40) zum Versiegeln des Schnellverschlusses (14) an einer Bahn (52) von der Bahnzufuhr (50).

2. Vorrichtung nach Anspruch 1, wobei das Gerät zum intermittierenden Erhalten eines Abschnitts der fortlaufenden Läange von Schnellverschlüssen eine Klammer (30) ist.

3. Vorrichtung nach einem der Ansprüche 1 oder 2, wobei das Gerät (26) zum Anordnen einer Endstampfung auf dem Abschnitt von fortlaufender Länge von Schnellverschlüssen (14) Ultraschallvorrichtungen benutzt.

4. Vorrichtung nach einem der Ansprüche 1, 2 oder 3, ferner enthaltend ein Speichergerät (16) zum Ermöglichen des Zuführens der fortlaufenden Länge von Schnellverschlüssen (14) von der Zufuhr, während ein Abschnitt der fortlaufenden Länge von Schnellverschlüssen in einer ortsfesten Position ist.

5. Vorrichtung nach Anspruch 4, wobei das Speichergerät (16) erste und zweite Rollen (18, 22) mit ortsfesten Drehachsen und eine dritte Rolle (20) enthält, die sich zum Ansammeln der fortlaufenden Länge von Schnellverschlüssen (14) von der ersten und zweiten Rolle (18, 22) wegbewegt und sich zum Abwickeln der fortlaufenden Länge von Schnellverschlüssen (14) zu einer Position zwischen der ersten und zweiten Rolle (18, 22) bewegt.

6. Vorrichtung nach einem der Ansprüche 4 oder 5, ferner enthaltend ein Abwicklungsgerät (32) zum Ermöglichen des Zuführens der fortlaufenden Länge von Schnellverschlüssen (14) zu dem Schleppversiegler (40), während ein Abschnitt der fortlaufenden Länge von Schnellverschlüssen (14) in einer ortsfesten Position ist.

7. Vorrichtung nach Anspruch 6, wobei das Abwicklungsgerät (32) erste und zweite Rollen (34, 38) mit ortsfesten Drehachsen und eine dritte Rolle (36) enthält, die sich zum Ansammeln der fortlaufenden Länge von Schnellverschlüssen (14) von der ersten und zweiten Rolle (34, 38) wegbewegt und sich zum Abwickeln der fortlaufenden Länge von Schnellverschlüssen (14) zu einer Position zwischen der ersten und zweiten Rolle (34, 38) bewegt.

8. Vorrichtung nach einem der vorhergehenden Ansprüche, ferner enthaltend die Verpackungsherstellungsvorrichtung (60), die die Bahn (52) mit Schnellverschlüssen (14), die durch den Schleppversiegler (40) daran versiegelt sind, empfängt.

9. Vorrichtung nach Anspruch 8, wobei die Verpackungsherstellungsvorrichtung eine Formfüll- und Versiegelungsvorrichtung (60) ist.

10. Vorrichtung nach Anspruch 9, wobei die Formfüll- und Versiegelungsvorrichtung (60) Rollen (88, 90) zum Ziehen der Bahn (52) mit Schnellverschlüssen (14), die durch den Schleppversiegler (40) daran versiegelt sind, zu der Formfüll- und Versiegelungsvorrichtung (60) enthält.

11. Vorrichtung nach einem der vorhergehenden Ansprüche, wobei der Sensor (54) optisch ist.

12. Vorrichtung nach einem der vorhergehenden Ansprüche, wobei der Schleppversiegler (40) mindestens ein Paar einander gegenüberliegender Siegelstangen (64, 66; 68, 70) enthält.

## Revendications

1. Appareil (10) pour fournir une fermeture à glissière (14) à un appareil de fabrication d'emballages refermables (60) comprenant :
une source d'alimentation (12) d'une longueur continue de fermeture à glissière (14) ;
un dispositif (30) pour maintenir de façon intermittente une portion de la longueur continue de fermeture à glissière (14) dans une position immobile ;
un dispositif (28) pour insérer un curseur sur la portion de la longueur continue de fermeture à glissière (14) dans une position immobile ;
un dispositif (26) pour placer une butée d'extrémité sur la portion de longueur continue de fermeture à glissière (14) dans une position immobile ;
une source d'alimentation (50) de bande (52) ;
un codeur (53) pour réguler l'alimentation de la bande (52) depuis la source d'alimentation (50) de bande ;
un capteur (54) pour détecter les butées d'extrémité ou les curseurs sur la longueur continue de fermeture à glissière (14) ; et
une scelleuse à traînée (40) pour sceller la fermeture à glissière (14) à une bande (52) provenant de la source d'alimentation (50) de bande.

2. Appareil selon la revendication 1, dans lequel le dispositif pour maintenir de façon intermittente une portion de la longueur continue de fermeture à glissière est une bride de serrage (30).

3. Appareil selon la revendication 1 ou la revendication 2, dans lequel le dispositif (26) pour placer une butée d'extrémité sur la portion de longueur continue de fermeture à glissière (14) utilise un appareil à ultrasons.

4. Appareil selon la revendication 1, 2 ou 3, comprenant en outre un dispositif accumulateur (16) pour permettre l'alimentation de la longueur continue de fermeture à glissière (14) depuis la source d'alimentation tandis qu'une portion de la longueur continue de fermeture à glissière est dans une position immobile.

5. Appareil selon la revendication 4, dans lequel le dispositif accumulateur (16) comprend un premier et un deuxième rouleau (18, 22) avec des axes de rotation immobiles, et un troisième rouleau (20) avec un axe de rotation qui s'écarte du premier et du deuxième rouleau (18, 22) pour accumuler la longueur continue de fermeture à glissière (14) et qui se déplace vers une position entre le premier et le deuxième rouleau (18, 22) pour désaccumuler la longueur continue de fermeture à glissière (14).

6. Appareil selon la revendication 4 ou la revendication 5, comprenant en outre un dispositif de désaccumulation (32) pour permettre l'alimentation de la longueur continue de fermeture à glissière (14) à la scelleuse à traînée (40) tandis qu'une portion de la longueur continue de fermeture à glissière (14) est dans une position immobile.

7. Appareil selon la revendication 6, dans lequel le dispositif de désaccumulation (32) comprend un premier et un deuxième rouleau (34, 38) avec des axes de rotation immobiles, et un troisième rouleau (36) avec un axe de rotation qui s'écarte du premier et du deuxième rouleau (34, 38) pour accumuler la longueur continue de fermeture à glissière (14) et qui se déplace vers une position entre le premier et le deuxième rouleau (34, 38) afin de désaccumuler la longueur continue de fermeture à glissière (14).

8. Appareil selon l'une quelconque des revendications précédentes, comprenant en outre ledit appareil de fabrication d'emballages (60) recevant la bande (52) avec la fermeture à glissière (14) scellée sur celle-ci depuis la scelleuse à traînée (40).

9. Appareil selon la revendication 8, dans lequel l'appareil de fabrication d'emballages est un appareil de formage, de remplissage et de scellage (60).

10. Appareil selon la revendication 9, dans lequel l'appareil de formage, de remplissage et de scellage (60) comprend des rouleaux (88, 90) pour tirer la bande (52) avec la fermeture à glissière (14) scellée sur celle-ci depuis la scelleuse à traînée (40) jusqu'à l'appareil de formage, de remplissage et de scellage (60).

11. Appareil selon l'une quelconque des revendications précédentes, dans lequel est capteur (54) est optique.

12. Appareil selon l'une quelconque des revendications précédentes, dans lequel la scelleuse à traînée (40) comprend au moins une paire de barres de scellage opposées (64, 66 ; 68, 70).
